**Europäisches Patentamt**

**European Patent Office**

**Office européen des brevets**

(11) Veröffentlichungsnummer: **0 407 735 A2**

# EUROPÄISCHE PATENTANMELDUNG

(21) Anmeldenummer: 90110678.1

(22) Anmeldetag: 06.06.90

(51) Int. Cl.5: **B01D 25/12**

(30) Priorität: **10.07.89 DE 3922633**

(43) Veröffentlichungstag der Anmeldung:
**16.01.91 Patentblatt 91/03**

(84) Benannte Vertragsstaaten:
**AT BE CH DE DK ES FR GB IT LI LU NL SE**

(71) Anmelder: **PASSAVANT-WERKE AG**

**D-6209 Aarbergen 7(DE)**

(72) Erfinder: **Busse, Oswald, Dr.-Ing.**
**Schillerstrasse 8**
**D-6209 Aarbergen 2(DE)**

(54) Verfahren zum Entwässern von Schlämmen in Filterpressen.

(57) Schlamm, der in einer Entwässerungseinrichtung, insbesondere einer Plattenfilterpresse, entwässert wird, wird ein polymeres Filterhilfsmittel (FHM) zur Verbesserung der Entwässerbarkeit zudosiert. Da die Flocken zur Bildung eine bestimmte Reifezeit benötigen, soll erfindungsgemäß ein Teilstrom des nicht filtrierten Schlamms an der dem Zulauf entgegengesetzten Stelle abgezogen und in den Haupstrom zurückgefürt werden. Die rückgeführten Flächen dienen als Flockungskeime. Ein weiterer Vorteil der Schlammrückführung besteht darin, daß die Flockenstruktur und/oder -größe nun im rückgeführten Teilstrom abgetastet werden kann. Die repräsentativen Meßergebnisse werden zur Veränderung von die Entwässerbarkeit bestimmenden Parametern benutzt.

Fig. 1

## VERFAHREN ZUM ENTWÄSSERN VON SCHLÄMMEN IN FILTERPRESSEN

Die Erfindung bezieht sich auf ein Verfahren zum Konditionieren und anschließenden Entwässern von Schlämmen in Filterpressen nach dem Oberbegriff von Anspruch 1.

Schlämme aus der Wasseraufbereitung oder Abwasserklärung werden zunehmend mit polymeren Filterhilfsmitteln konditioniert, um ihre Entwässerbarkeit zu verbessern. Es ist bekannt, daß sich eine gut entwasserbare Flocke erst nach einer bestimmten Flockenreifezeit bildet. Im Betrieb wird insbesondere zu. Beginn des Filtrationszyklus' wegen der kurzen Aufenthaltszeit bis zu den vorderen Filterplatten diese Reifezeit nicht erreicht. Es ist dann oft nötig, die Zufuhrleitung entsprechend groß zu dimensionieren. Die Aufgabe, diese Nachteile zu beseitigen, wird gemäß der Erfindung nunmehr dadurch gelöst, daß der Entwässerungseinrichtung an dem der Zuführstelle entgegengesetzten Ende ein Teilstrom wieder entnommen und dieser Teilstrom in den Zulauf zurückgeführt wird. Mit der Rückführung des Teilstroms in den Schlammzulauf sind folgende Vorteile verbunden:

- Die zurückgeführten Schlammflocken wirken wie Kontaktschlamm bei der Neubildung von Schlammflocken.

- Die zurückgeführten Schlammflocken werden durch die Schlammfördereinrichtung und/oder die dieser nachgeschaltete Mischeinrichtung des polymeren Filterhilfsmittels derart zerkleinert, daß sie die neue Flockenbildung begünstigen und zum Entstehen von in der Entwässerungseinrichtung stabilen Flocken beitragen.

Vorzugsweise ist der rückgeführte Teilstrom einstellbar oder regelbar. Dadurch können die Betriebsbedingungen der Entwässerungseinrichtung der Schlammart und der Entwässerungsphase besser angepaßt werden.

Durch die DE-OS 37 43 428 ist ein Verfahren zum Konditionieren und anschließenden Entwässern von Klärschlämmen bekannt geworden, bei dem die Flockenstruktur und/oder -größe nach Zumischen des Filterhilfsmittels abgetastet wird. Die Meßergebnisse werden zur Veränderung von einem oder mehreren die Entwässerbarkeit bestimmenden Parametern verwendet, wobei die Sollwerte für die Parameter durch Vergleich mit optimal entwässerbaren repräsentativen Schlammarten gefunden wurden. Das Abtasten der Schlammflocken im Hauptstrom zur Entwässerungseinrichtung erbringt jedoch nicht die gewünschten repräsentativen Aussagen über das Verhalten der Flocken in der Entwässerungseinrichtung. Es wird daher in Ausgestaltung der vorliegenden Erfindung vorgeschlagen, nicht den Hauptstrom sondern den rückgeführten Teilstrom vor Einleitung in den Hauptstrom hinsichtlich Flockenstruktur und/oder -größe abzutasten und die Meßergebnisse zur Veränderung von einem oder mehreren die Entwässerbarkeit bestimmenden Parametern zu verwenden. Mit einer solchen Verfahrensweise ist der Vorteil verbunden, daß die Flocken, die die Entwässerungseinrichtung ungefiltert durchlaufen haben, eine bessere Aussage über ihre Entwässerbarkeit geben, weil die Einflüsse, die sie in der Entwässerungseinrichtung erfahren haben, besser erfaßt werden.

Die Schlammzuführleitung weist nach der Zugabestelle des Filterhilfsmittels eine regelbare Mischeinrichtung auf Diese ist einer der die Filtrierbarkeit bestimmenden Parameter. In Ausgestaltung der Erfindung wird vorgeschlagen, daß der rückgeführte Teilstrom vor dieser Mischeinrichtung wieder zugeführt wird. Die rückgeführten Flocken werden dort intensiv zerkleinert und als Flockenkeime zur Verfügung gestellt.

Als Abtasteinrichtung kommt insbesondere eine Meßbildsonde in Frage. Diese Abtasteinrichtung arbeitet nur bei einer bestimmten Strömungsgeschwindigkeit optimal. Es wird daher erfindungsgemäß vorgeschlagen, die Teilstrommenge während der Abtastung diesen Bedingungen anzupassen, ihn also insbesondere zu drosseln.

Für eine besssere Anpassung kann es vorteilhaft sein, die Abtasteinrichtung in ein By-Pass der Schlammrückführleitung zu legen und diesen By-Pass nur während der Abtastung zu öffnen.

Geeignete Anlagen zur Durchführung des vorgeschilderten Verfahrens sind in der Zeichnung schematisch dargestellt.

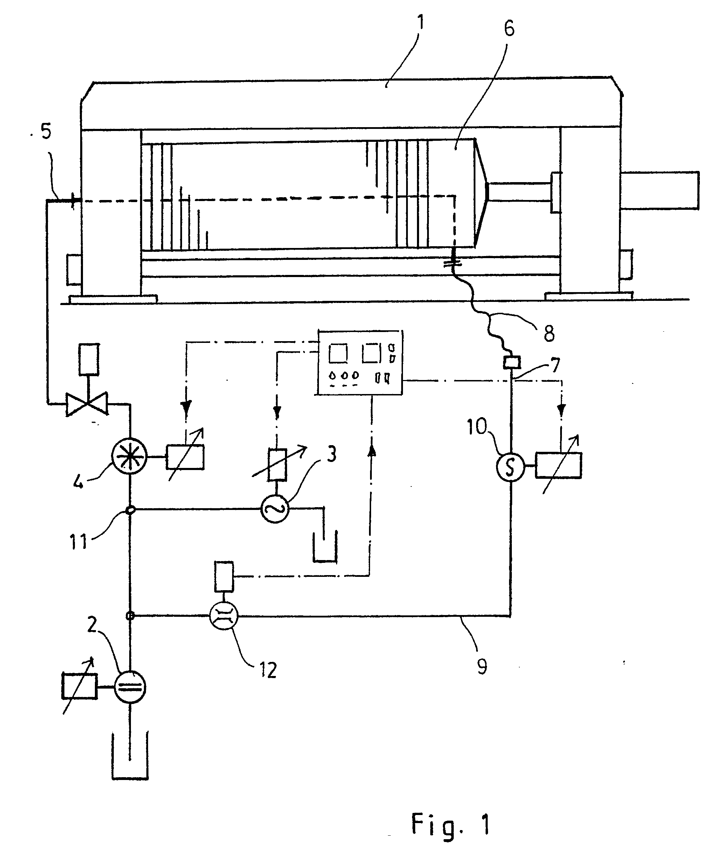

Die Anlage nach Fig. 1 besteht aus einer Plattenfilterpresse 1, einer Schlammförderpumpe 2, einer Zudosiervorrichtung 3 für das polymere Filterhilfsmittel und einer verstellbaren Mischeinrichtung 4 hinter der Zugabestelle des Filterhilfsmittels. An der dem Zulauf 5 abgewandten Seite (verstellbares Preßhaupt 6) ist ein Abzugsrohr 7 für den rückgeführten Teilstrom angeschlossen, wobei die Verbindung zu dem ortsfest verlegten Rohr durch eine flexible Schlauchleitung 8 hergestellt ist. In der Rückführleitung 9 liegt eine regelbare Förderpumpe 10 und - kurz vor der Einmündung 11 in die Hauptförderleitung - eine Meßbildsonde 12 zum Abtasten der rückgeförderten Schlammflocken. Deren Meßwerte werden auf die Mischeinrichtung 4, die Teilstrom-Förderpumpe 10 und die Polymer-Dosiereinrichtung 3 gegeben.

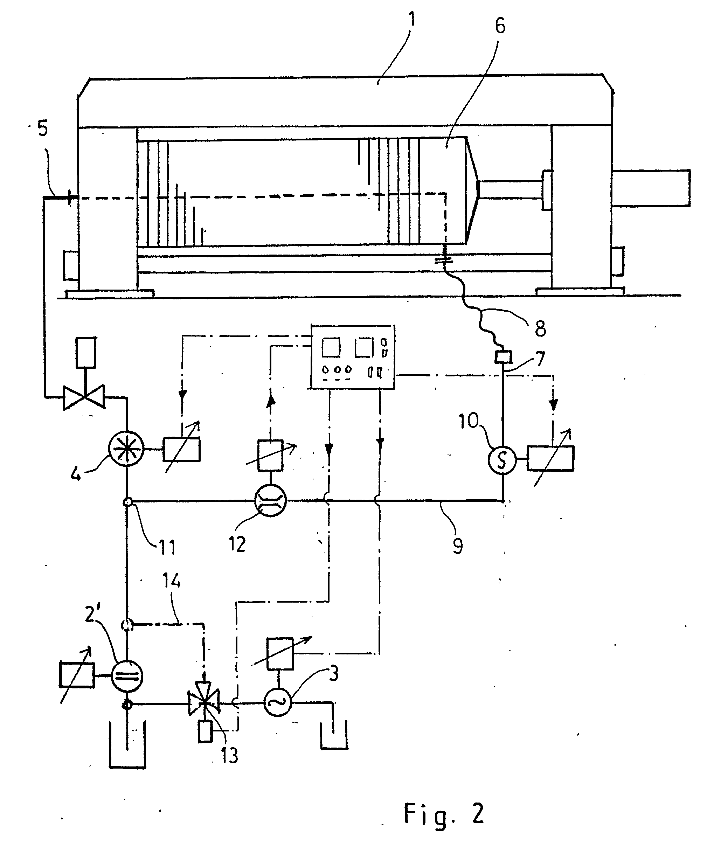

Die Anlage nach Fig 2 unterscheidet sich von der nach Fig. 1 lediglich dadurch, daß die Einmündung der Filterhilfsmittelzufuhr auf der Saugseite der Schlammförderpumpe 2' liegt Mit dieser Anordnung ist der Vorteil verbunden, daß dann bereits die Schlammförderpumpe 2' als Zerkleinerungsvorrichtung für die hiernach gebildeten Schlammflokken dient. Es ist auch denkbar, die Zufuhrstelle des Filterhilfsmittels während der Filtercharge oder je nach Schlammart zwischen Druckseite und Saugseite der Schlammförderpumpe 2 zu wechseln, wofür ein Umschaltventil 13 und eine Zweigleitung 14 vorgesehen sind. Die Meßwerte der Meßbildsonde werden zusätzlich auf das Umschaltventil 13 gegeben.

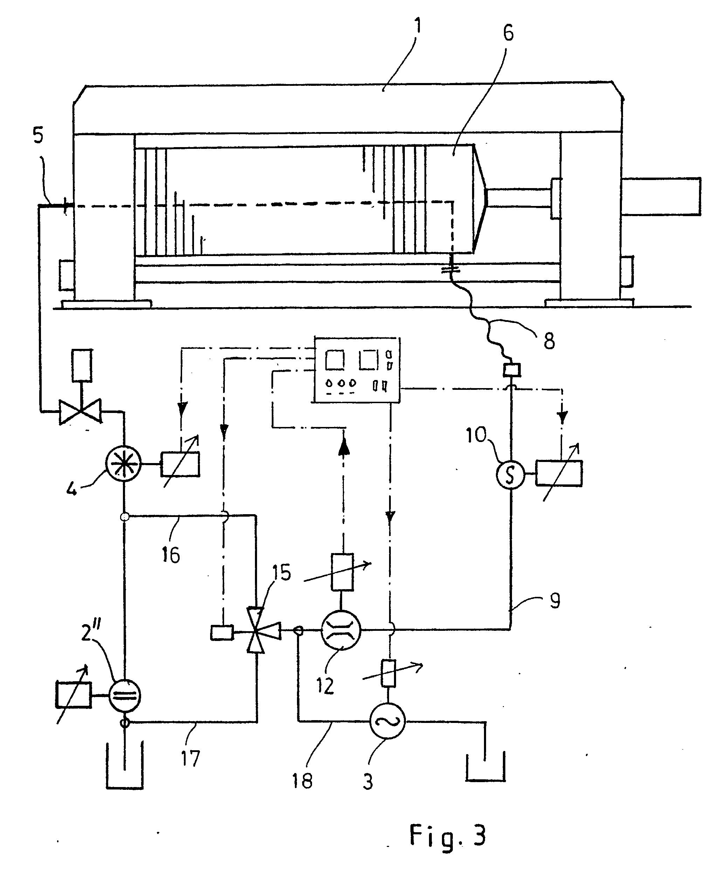

Bei der Anlage nach Fig. 3 kann zusätzlich die Schlammrückführleitung 9 auf die Saug- oder Druckseite der Schlammförderpumpe 2" geschaltet werden. Hierzu ist ein von den Meßergebnissen und/oder dem Fitrationsdruck gesteuertes Umschaltventil 15 und entsprechende Zweigleitungen 16, 17 vorgesehen. Die Dosierleitung 18 für das Filterhilfsmittel mündet vor diesem Umschaltventil 15 in die Rückführleitung 9, so daß auch die Filterhilfsmittelzugabe zwischen Druck- und Saugseite wechseln kann.

## Ansprüche

1. Verfahren zum Konditionieren und anschließenden Entwässern von Schlämmen, insbesondere Klärschlämmen aus der Wasseraufbereitung und Abwasserklärung, in Filterpressen, bei dem ein Teilstrom des der Filterpresse zugeführten Schlamms an dem der Zuführstelle entgegengesetzten Ende abgeführt wird, **dadurch gekennzeichnet**, daß der Teilstrom in den Zulauf zurückgeführt wird.

2. Verfahren nach Anspruch 1, **dadurch gekennzeichnet**, daß die Größe des Teilstroms einstellbar ist.

3. Verfahren nach Anspruch 1 oder 2, **dadurch gekennzeichnet**, daß der Teilstrom regelbar ist.

4. Verfahren nach Anspruch 1, 2 oder 3, **dadurch gekennzeichnet**, daß der Teilstrom hinsichtlich Flockenstruktur und/oder -größe abgetastet wird und die Meßergebnisse zur Veränderung von einem oder mehreren die Entwässerbarkeit bestimmenden Parametern verwendet werden

5. Verfahren nach Anspruch 4, **dadurch gekennzeichnet**, daß der Teilstrom während der Abtastung den Betriebsbedingungen der Abtasteinrichtung angepaßt wird.

6. Verfahren nach Anspruch 4 oder 5, **dadurch gekennzeichnet**, daß der Teilstrom zur Abtastung in einen By-Pass der Teilstromleitung geführt wird.

7. Verfahren nach einem oder mehreren der vorstehenden Ansprüche, **dadurch gekennzeichnet**, daß der Teilstrom auf der Druckseite der Schlammfördereinrichtung wieder zugegeben wird.

8. Verfahren nach einem oder mehreren der vorstehenden Ansprüche, **dadurch gekennzeichnet**, daß der Teilstrom auf der Saugseite der Schlammfördereinrichtung wieder zugegeben wird.

9. Verfahren nach einem oder mehreren der Ansprüche 1 bis 8, mit einer regelbaren Mischeinrichtung für die Schlammkonditionierungsmittel **dadurch gekennzeichnet**, daß der Teilstrom vor der Mischeinrichtung zugegeben wird.

10. Verfahren nach Anspruch 9, **dadurch gekennzeichnet**, daß der Teilstrom zusammen mit oder im Bereich der Konditionierungsmittelzugabe zugegeben wird.

11. Verfahren nach Anspruch 10, **dadurch gekennzeichnet**, daß das Konditionierungsmittel in den rückgeführten Teilstrom gegeben wird.

12. Verfahren nach Anspruch 10 oder 11, **dadurch gekennzeichnet**, daß die Wiederzuführung des Teilstroms während des Filterzyklus zwischen Saugseite und Druckseite der Schlammfördereinrichtung wechselt.

13. Verfahren nach Anspruch 12, **dadurch gekennzeichnet**, daß der Wechsel vom Abtastergebnis abhängig gemacht wird.

Fig. 1

Fig. 2

Fig. 3